# EUROPÄISCHE PATENTSCHRIFT

(11) **EP 1 040 945 B1**
(45) Veröffentlichungstag und Bekanntmachung des Hinweises auf die Patenterteilung: **19.11.2003**
(21) Anmeldenummer: 00104628.3
(22) Anmeldetag: 03.03.2000
(51) Int. Cl.: B60H 1/00

(54) **Verfahren zum Betrieb einer Heiz-/Klimaanlage eines Fahrzeugs sowie Vorrichtung zur Durchführung des Verfahrens**
Method of operating a heating/air condition device of a vehicle together with apparatus for carrying out the method
Procédé d'utilisation d'un dispositif de chauffage/climatisation d'un véhicule et dispositif pour la réalisation de ce procédé

(30) Priorität: 31.03.1999 DE 19914534
(43) Veröffentlichungstag der Anmeldung: 04.10.2000
(73) Patentinhaber: Bayerische Motoren Werke Aktiengesellschaft, 80809 München (DE)
(72) Erfinder: Eder, Karlheinz, 80799 München (DE); Herpel, Thomas, Dr., 85737 Ismaning (DE)

(56) Entgegenhaltungen:
- EP-A- 0 618 098
- EP-A- 0 872 368
- US-A- 5 518 176
- PATENT ABSTRACTS OF JAPAN vol. 012, no. 109 (M-682), 8. April 1988 (1988-04-08) & JP 62 238106 A (AUTOMOB ANTIPOLLUT & SAF RES CENTER), 19. Oktober 1987 (1987-10-19)
- PATENT ABSTRACTS OF JAPAN vol. 010, no. 014 (M-447), 21. Januar 1986 (1986-01-21) & JP 60 174310 A (MATSUSHITA DENKI SANGYO KK), 7. September 1985 (1985-09-07)
- PATENT ABSTRACTS OF JAPAN vol. 016, no. 290 (M-1272), 26. Juni 1992 (1992-06-26) & JP 04 078709 A (ISUZU MOTORS LTD), 12. März 1992 (1992-03-12)
- PATENT ABSTRACTS OF JAPAN vol. 006, no. 153 (M-149), 13. August 1982 (1982-08-13) & JP 57 070726 A (NISSAN MOTOR CO LTD), 1. Mai 1982 (1982-05-01)

## Beschreibung

Die Erfindung bezieht sich auf ein Verfahren zum Betrieb einer Heiz- /Klimaanlage eines Fahrzeugs und eine Vorrichtung zur Durchführung des Verfahrens, gemäß Oberbegriff des Anspruchs 1.

In Fahrzeugen mit derartigen Verfahren zum Betrieb einer Heiz- /Klimaanlage (siehe z. B. JP-A-5 7070726) ist es allgemein üblich, den Innenraum-Temperatur-Istwert entsprechend einem vorzugsweise manuell vorgebbaren Sollwert zu regeln. Dabei wird angestrebt, den Istwert auf denselben Wert wie den Sollwert einzustellen. Völlig unberücksichtigt bleibt dabei die Bekleidung des Fahrgastes. Bei warmer Bekleidung, d. h. mit guter thermischer Isolationsfähigkeit, sogenannter Winterbekleidung, benötigt der Fahrgast eine geringere Wärmezufuhr als bei Sommerbekleidung, um sich behaglich im Fahrzeug zu fühlen. Sitzt der Fahrgast mit Winterbekleidung im Fahrzeug, wird er tendenziell einen niedrigeren Sollwert vorgeben, um sich behaglich zu fühlen. Eine ggf. erforderliche Korrektur des Temperatur-Sollwerts ist bis dato manuell durch den Fahrgast vorzunehmen. Abgesehen von der damit verbundenen Unbequemlichkeit erfolgt diese Korrektur i. d. R. erst dann, wenn es dem Fahrgast zu warm ist. Zwar reagiert eine fahrzeugseitige Regelung in aller Regel schnell. Bedingt durch die gute thermische Isolation der Bekleidung aber nimmt der Fahrgast die Absenkung der Innenraumtemperatur nur verzögert wahr. Bis dahin aber ist er einer als unangenehm empfundenen zu großen Wärme bzw. einem Wärmestau ausgesetzt. Die Folge davon kann eine vorschnelle Ermüdung des Fahrgastes sein.

Der Erfindung liegt die Aufgabe zugrunde, bei einem Verfahren der eingangs genannten Art den Temperatur-Istwert entsprechend dem subjektiven Wärmeempfinden des Fahrgastes zu korrigieren. Es ist ferner eine Aufgabe der Erfindung, eine zur Anwendung im Rahmen des Verfahrens geeignete Vorrichtung zu schaffen.

Die Erfindung löst diese Aufgabe für das Verfahren durch die Merkmale des Patentanspruchs 1, für die Vorrichtung für die des Patentanspruchs 3.

Beim erfindungsgemäßen Verfahren werden die thermischen Eigenschaften der Bekleidung des Fahrgastes berücksichtigt. Besitzt die Bekleidung eine gute thermische Isolationswirkung, wird der Ist-Wert der Innenraumtemperatur gegenüber dem Fall einer Bekleidung mit schlechter thermischer Isolationswirkung verringert. Bedingt durch die thermische Wirkung der Bekleidung ist es im ersten Fall nur notwendig, relativ wenig Wärme dem Fahrgast zuzuführen. Das physiologische Zusammenspiel von geringer Wärmeabgabe und entsprechend geringer Wärmezufuhr läßt die Wärmebilanz des Fahrgastes als ausgeglichen und damit als Ausdruck der Behaglichkeit erscheinen. Umgekehrt ist bei einer schlechten thermischen Isolation der Bekleidung eine hohe Wärmeabfuhr gegeben. Diese kann nur durch eine entsprechend hohe Wärmezufuhr kompensiert werden. Letzteres bedeutet eine tendenzielle Erhöhung der Innenraum-Isttemperatur. Hierfür kann die Wärmeleistung eines für die Temperierung der Innenraumluft vorgesehenen Wärmetauschers und/oder die Steigerung des Luftdurchsatzes durch einen derartigen Wärmetauscher sinnvoll sein.

Die Berücksichtigung der thermischen Eigenschaften der Bekleidung kann beispielsweise manuell durch den Fahrgast selbst erfolgen. Durch eine geeignete Eingabemöglichkeit kann er selbst die Art seiner Bekleidung der Innenraum-Temperaturregelung mitteilen. Demgegenüber ergibt sich eine deutliche Komfortsteigerung, wenn die thermischen Eigenschaften der Bekleidung bestimmt werden und ein entsprechender Ist-Temperatur-Korrekturwert aus einem Kennfeld entnommen wird.

Für die selbsttätige Bestimmung der thermischen Eigenschaften der Bekleidung kann eine geeignete Sensorik auf unterschiedliche Weise arbeiten. Es ist beispielsweise möglich, von extern die Bekleidung mit einer definierten Strahlung zu beaufschlagen und anhand der Eigenschaften und der Quantität der reflektierten Strahlung die Isolationswirkung der Bekleidung zu bestimmen. Demgegenüber ergibt sich eine wesentlich genauere Aussage über die in Frage stehenden Bekleidungseigenschaften dann, wenn die Sensorik im Sitz angeordnet ist. Es ist dann möglich, den Wärmestrom zwischen Fahrgast und Sitz zu bestimmen. Da dieser im wesentlichen bestimmt wird durch die thermischen Eigenschaften der Bekleidung, ergibt sich damit eine gute Aussage über diese Eigenschaften.

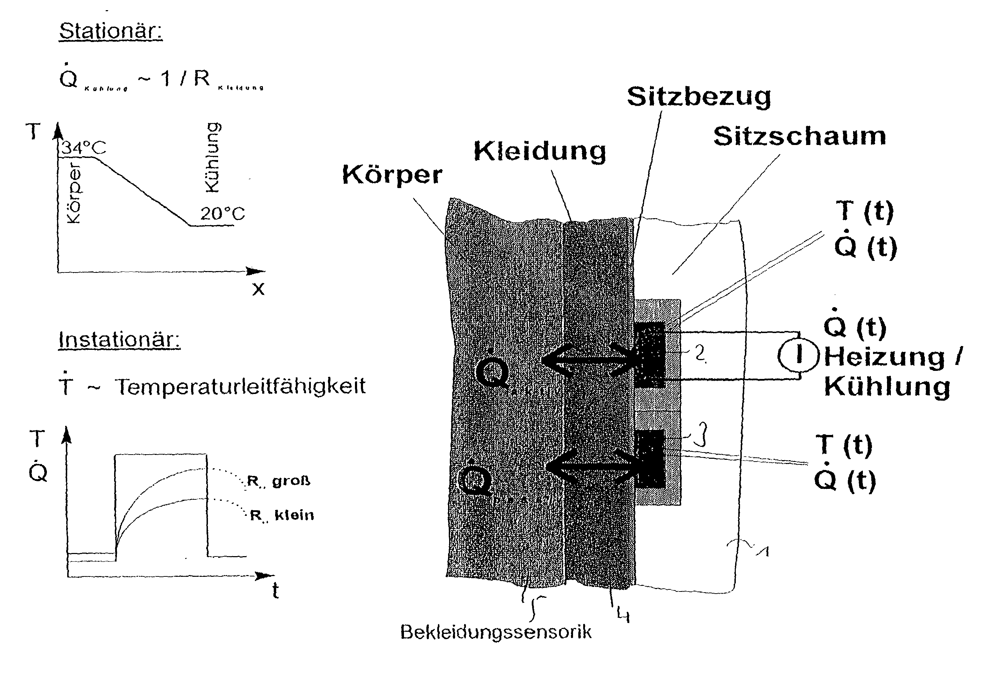

Anhand der Zeichnung ist die Erfindung weiter erläutert.

Es zeigt die einzige Figur schematisch den Aufbau einer erfindungsgemäßen Vorrichtung zur Bestimmung der thermischen Eigenschaften der Bekleidung eines Fahrgastes.

Die Figur zeigt zwei Möglichkeiten, die thermischen Eigenschaften der Bekleidung eines Fahrgastes zu bestimmen. Bei beiden Fällen sitzt in der Oberfläche eines Fahrzeugsitzes 1 eine Sensorik 2 bzw. 3, mit der die thermischen Eigenschaften der Bekleidung 4 eines Fahrgastes 5 bestimmt wird.

Der Sensor 2 bestimmt aktiv die Wärmeströmung, die sich zwischen dem Sensor 2 und dem Körper 5 des Fahrgastes ausbildet. Dabei kann der Sensor 2 sowohl als Wärmequelle als auch als Wärmesenke dienen. Im einen Fall wird er vorzugsweise elektrisch beheizt. Hierzu besitzt der Sensor 2 einen elektrischen Widerstand, der mit einer definierten Leistung beaufschlagt wird und dessen Temperatur und - änderung beispielsweise anhand des Widerstandswertes der elektrischen Heizung bestimmt wird. Im anderen Fall ist der Sensor beispielsweise als Peltier-Element ausgebildet, das mit einem definierten Strom beaufschlagt wird und dadurch die Temperatur in definierter Weise verringert.

Der Sensor 3 arbeitet passiv. Ausgehend von der Situation bei Inbetriebnahme des Fahrzeugs besitzt der Sensor 3 die Temperatur des Innenraums. Sobald sich der Fahrgast auf den Sitz setzt, erfolgt eine Erwärmung des Sensors 3. Der Temperaturanstieg bis möglicherweise auf die Körpertemperatur von 37° hängt von der Isolationswirkung der Bekleidung 4 ab. Ist die Wirkung stark, so erfolgt der Temperaturanstieg relativ langsam. Umgekehrt bei einer geringen Isolationswirkung geschieht der Temperaturanstieg relativ schnell. Aus dem Temperaturgradienten läßt sich ein eindeutiger Rückschluß auf die thermischen Eigenschaften der Bekleidung feststellen.

Mit dem anhand der Temperaturänderungsverläufe der Sensoren 2 bis 3 gewonnenen Gradienten ist es möglich, die thermischen Eigenschaften der Bekleidung 4 zu ermitteln. Abhängig von diesen Eigenschaften wird aus einem nicht dargestellten Kennfeld ein Korrekturwert für die einzustellende Isttemperatur des Innenraums gewonnen. Bei einer definierten Vorgabe eines Temperatur-Sollwerts über einen entsprechenden Geber wird damit die Innenraumtemperatur für den jeweiligen Fahrgast in einer Weise gesteuert, die ihm das Gefühl der Behaglichkeit vermittelt.

## Patentansprüche

1. Verfahren zum Betrieb einer Heiz- /Klimaanlage eines Fahrzeugs, mit einem Temperatur-Sollwertgeber und einer nachgeschalteten Regelung eines Innenraum-Temperatur-Istwerts entsprechend dem vorgegebenen Sollwert, **dadurch gekennzeichnet, daß** der Temperatur-Istwert durch das Ausgangssignal eines auf die thermischen Eigenschaften der Bekleidung des Fahrgastes ansprechenden Sensorik im Sinne einer Temperaturverringerung bei thermisch gut isolierender Bekleidung beeinflußt wird.

2. Verfahren nach Anspruch 1, **dadurch gekennzeichnet, daß** die thermischen Eigenschaften der Bekleidung bestimmt werden und ein entsprechender ist-Temperatur-Korrekturwert aus einem Kennfeld entnommen wird.

3. Vorrichtung zur Durchführung des Verfahrens nach Anspruch 1 oder 2, **dadurch gekennzeichnet, daß** die Sensorik im Sitz angeordnet ist.

4. Vorrichtung nach Anspruch 3, **dadurch gekennzeichnet, daß** die Sensorik die Wärmeabfuhr über die Bekleidung des Fahrgastes registriert.

## Claims

1. A method for the operation of a heating/air conditioning device in a vehicle with a temperature target value transmitter and a controller connected after this for the actual value of the internal temperature corresponding to the prescribed target value, **characterised in that** the actual value of temperature is controlled by the output signal of a sensor responding to the thermal characteristics of the clothing of the passenger in the sense of a reduction of temperature with thermally good insulating clothing.

2. A method according to claim 1, **characterised in that** the thermal characteristics of the clothing are determined and a corresponding actual temperature correction value is taken from a characteristic field.

3. A device for the performance of the method according to claim 1 or claim 2, **characterised in that** the sensor is arranged in the seat.

4. A device according to claim 3 **characterised in that** the sensor registers the heat loss by the clothing of the passenger.

## Revendications

1. Procédé pour exploiter une installation de chauffage/climatisation d'un véhicule, comprenant un émetteur de valeur de consigne de température et une régulation placée en aval d'une valeur réelle de température intérieure selon la valeur de consigne déterminée,
**caractérisé en ce que**
la valeur réelle de température est influencée par le signal de sortie d'un dispositif capteur réagissant aux propriétés thermiques du vêtement du passager pour réduire la température en présence d'un vêtement à bonne isolation thermique.

2. Procédé selon la revendication 1,
**caractérisé en ce que**
les propriétés thermiques du vêtement sont déterminées, et une valeur de correction de la température réelle est prise dans un champ caractéristique.

3. Dispositif pour la mise en oeuvre du procédé selon la revendication 1 ou 2,
**caractérisé en ce que**
le dispositif capteur est placé dans le siège.

4. Dispositif selon la revendication 3,
**caractérisé en ce que**
le dispositif capteur enregistre le dégagement de chaleur par le vêtement du passager.
